# EUROPEAN PATENT SPECIFICATION

(11) **EP 2 223 975 B1**
(45) Date of publication and mention of the grant of the patent: **17.04.2019**
(21) Application number: 08857313.4
(22) Date of filing: 08.12.2008
(51) Int. Cl.: C04B 26/28, C04B 28/26, C09D 1/04, B05D 7/14, C09D 5/02, C09D 5/08, C09D 133/00, C09D 163/00, C09D 175/04, C23C 26/00, C23C 22/60, C23C 22/68, C04B 111/00, C04B 103/00

(54) **SURFACE-TREATING AQUEOUS SOLUTION AND TREATMENT METHODS FOR FORMING CORROSION-RESISTANT COATING FILM OVER ZINC OR ZINC ALLOY DEPOSIT**
WÄSSRIGE OBERFLÄCHENBEHANDLUNGSLÖSUNG UND BEHANDLUNGSVERFAHREN ZUR BILDUNG EINES KORROSIONSRESISTENTEN BESCHICHTUNGSFILMS AUF ZINK- ODER ZINKLEGIERUNGSABSCHEIDUNGEN
SOLUTION AQUEUSE DE TRAITEMENT DE SURFACE ET PROCÉDÉS DE TRAITEMENT POUR LA FORMATION D'UN FILM DE REVÊTEMENT RÉSISTANT À LA CORROSION SUR UN DÉPÔT EN ZINC OU EN UN ALLIAGE DE ZINC

(30) Priority: 07.12.2007 JP 2007317156
(43) Date of publication of application: 01.09.2010
(73) Proprietor: Dipsol Chemicals Co., Ltd., Chuo-ku Tokyo 104-0061 (JP)
(72) Inventor: SAKURAI, Hitoshi, Tokyo 124-0025 (JP); YUASA, Satoshi, Tokyo 124-0025 (JP); NONOMURA, Keisuke, Tokyo 124-0025 (JP)
(74) Representative: Cockerton, Bruce Roger
(86) International application number: PCT/JP2008/072257
(87) International publication number: WO 2009/072648

(56) References cited:
- WO-A1-2007/069783
- WO-A1-2007/075050
- WO-A2-2006/069376
- JP-A- 9 323 066
- JP-A- 2001 026 886
- JP-A- 2007 138 225
- JP-A- 2007 270 302

## Description

### TECHNICAL FIELD

The present invention relates to an anti-rust treatment liquid and an anti-rust treatment method applied to a zinc plating or a zinc alloy plating.

### BACKGROUND ART

Zinc platings and zinc alloy platings have been widely used as anti-rust platings for steel plates, steel parts, and the like. However, the platings may undergo the formation of white rust due to sacrificial corrosion of zinc, and thus have an insufficient corrosion resistance. For this reason, chemical conversion treatments, such as the chromate treatment, have been performed for inhibiting rust of zinc platings and zinc alloy platings. However, hexavalent chromium used for the chromate treatment is highly toxic although it has an effective anti-corrosion effect. Accordingly, the use of hexavalent chromium has been increasingly limited because of its adverse effects on the environments and human bodies.

As an alternative to the chromate treatment, which involves hexavalent chromium, many proposals regarding hexavalent chromium-free or completely chromium-free chemical conversion treatments and coatings have been made, and some of the proposals have been put into practice. However, hexavalent chromium-free or completely chromium-free chemical conversion treatments and coating methods proposed so far are unsatisfactory in terms of performances such as corrosion resistant, appearance, uniformity, and adhesion, and moreover have problems of workability, working environments, and the like.

In the cases of coating methods reported so far each using one of or both of a silicic acid (salt) compound and a silane coupling agent (Patent Documents 1 to 4), the concentrations of these compounds in a treatment liquid are high. For this reason, the components in the treatment liquid remain on a treated item at its portions where liquid accumulation is likely to occur, such as a recessed portion and a lower portion. This causes an appearance failure (occurrence of a strain due to sagging, a non-uniform appearance, or the like), and a failure in the thickness uniformity. In this respect, countermeasures against these failures have been demanded.
Patent Document 1: Japanese Patent Application Publication No. Hei. 2-38582
Patent Document 2: Japanese Patent Application Publication No. Sho. 63-57674
Patent Document 3: Japanese Patent Application Publication No. 2001-26886
Patent Document 4: Japanese Patent Application Publication No. 2007-138225

WO 2006/069376 describes super primer that includes a composition said to be capable of coating a substrate and curing to provide a hydrophobic film inhibiting corrosion, the composition comprises a mixture of silanes; a dispersible or soluble resin and an aqueous or non-aqueous solvent.

WO 2007/075050 A1 describes chromium-free layer which is formed by a chromium-free treatment liquid coated on a steel sheet. The chromium-free treatment liquid contains silicate; silane; titanium compound; binder resin and phosphoric ester.

WO 2007/069783 A1 describes a surface treatment for metal materials obtained by incorporating an anionic water dispersible resin having a glass transition temperature of 0°C or above, at least one member selected from the group consisted of alkaline metal silicates and basic zirconium compounds in water.

JP 2007 138225 A describes a surface treatment for a galvanised steel sheet by applying a surface treating liquid which contains an epoxy group containing silane coupling agent; a vanadium compound and which is substantially free from resin; wax and chromium compound.

### DISCLOSURE OF THE INVENTION

An object of the present invention is to provide a chromium-free treatment liquid and treatment method for providing a zinc or zinc alloy plating with a coating film having: a high corrosion resistance; a uniform appearance free from a stain due to sagging and a stain due to accumulation; and a favorable adhesion, as well as being free from a failure in the thickness uniformity.

The present inventors have made keen examination to find that, when a zinc or zinc alloy plating is subjected to a surface-treating aqueous solution containing specific components, a coating film having the following favorable performances can be formed on the zinc or zinc alloy plating. Specifically, the coating film has a corrosion resistance and an adhesion at levels equal to or higher than those of conventional chromate treatment coating films containing hexavalent chromium, and a uniform appearance free from a stain due to sagging and a stain due to accumulation, and the coating film is also free from the failure in the thickness uniformity. As a result, the present inventors have completed the present invention. Thus, the present invention provides a surface-treating aqueous solution according to claim 1 for forming a corrosion resistant coating film on a zinc or zinc alloy plating.

In addition, the present invention provides a surface treatment method for forming a highly corrosion resistant coating film on a zinc or zinc alloy plating, the method comprising the step of bringing a surface of the zinc or zinc alloy plating into contact with the above-described surface-treating aqueous solution.

Moreover, the present invention can be applied to a surface of a hexavalent chromium-free or completely chromium-free chemical conversion coating film formed on a zinc or zinc alloy plating. Thus, the present invention also provides a surface treatment method for forming a highly corrosion resistant coating film on a zinc or zinc alloy plating, the method comprising the step of bringing a surface of a chemical conversion coating film into contact with the above-described surface-treating aqueous solution the chemical conversion coating film being formed on the zinc or zinc alloy plating.

In addition, the present invention provides a highly corrosion resistant coating film formed by bringing the aforementioned into contact with a surface of the zinc or zinc alloy plating or with a surface of a chemical conversion coating film formed on the zinc or zinc alloy plating.

The surface-treating aqueous solution of the present invention can be applied to a zinc or zinc alloy plating, and a product obtained by subjecting such a zinc or zinc alloy plating to a chemical conversion treatment such as a trivalent chromium chemical conversion treatment or a completely chromium-free chemical conversion treatment. The treatment with the surface-treating aqueous solution of the present invention makes it possible to provide a coating film having a corrosion resistance at a level equal to or higher than those of conventional coating films obtained by the chromate treatment involving hexavalent chromium, an uniform appearance free from a stain due to sagging and a stain due to accumulation, and a favorable adhesion, as well as being free from a failure in the thickness uniformity. The surface treatment method of the present invention is useful as an anti-rust treatment method which involves no hexavalent chromium and which is alternative to the chromate treatment.

### BEST MODE FOR CARRYING OUT THE INVENTION

A surface-treating aqueous solution for forming a corrosion resistant coating film on a zinc or zinc alloy plating of the present invention is characterized by containing (a) an alkali metal silicate (M₂O·nSiO₂ (where, M represents an alkali metal, and n represents a SiO₂/M₂O molar ratio)) wherein the molar ratio (n) of the alkali metal silicate is from 1/1 to 4.5/1 and the concentration of the alkali metal silicate in the treating aqueous solution is from 0.25 to 5 % by weight in terms of the solid content concentration; (b) a water-soluble or water-dispersible silane coupling agent, and (c) glycidol or a water-soluble or water-dispersible mono- or poly-glycidyl ether of an aliphatic mono- or poly-alcohol which has (i) two or more glycidyl ether groups, or (ii) one or more hydroxyl groups and one or more glycidyl ether groups. By using the surface-treating aqueous solution the present invention, a corrosion resistant coating film may be formed directly on a zinc plating or a zinc alloy plating; alternatively, a corrosion resistant coating film may be formed after a zinc plating or a zinc alloy plating is subjected to a chemical conversion treatment, such as a hexavalent chromium-free trivalent chromium chemical conversion treatment, or a completely chromium-free chemical conversion treatment. Here, examples of the zinc alloy plating include alloy platings containing zinc, such as a zinc-nickel alloy plating, a zinc-iron alloy plating, a zinc-cobalt alloy plating, and a tin-zinc alloy plating.

The alkali metal silicate (a) is generally represented by M₂O·nSiO₂ (where, M represents an alkali metal, and n represents a SiO₂/M₂O molar ratio). The SiO₂/M₂O molar ratio (n) of the alkali metal silicate is in a range from 1/1 to 4.5/1, and more preferably in a range from 2/1 to 4/1. The alkali metal silicate is preferably obtained by mixing lithium hydroxide, sodium hydroxide, or potassium hydroxide with colloidal silica. By setting the SiO₂/M₂O molar ratio (n) of the alkali metal silicate within the above-described ranges, it is possible to obtain a favorable stability of the treating agent and a favorable corrosion resistance of the coating film. Regarding the alkali metal silicate, alkali metal silicates may be used alone or in any combination of at least two of them.

Meanwhile, the concentration of the alkali metal silicate in the surface-treating aqueous solution is 0.25 to 5% by weight, and more preferably 0.3 to 3% by weight, in terms of solid content concentration. By setting the concentration of the alkali metal silicate in the surface treating aqueous solution within the above-described ranges, it is possible to obtain a favorable corrosion resistance of the coating film, to obtain a uniform appearance by preventing a stain due to sagging and a stain due to accumulation, and to prevent a failure in the thickness uniformity.

There is no particular limitation on the water-soluble or water-dispersible silane coupling agent (b) as long as the silane coupling agent is dissolvable in water or suspendable stably as it is in water at a concentration to be used. Preferred examples of the water-soluble or water-dispersible silane coupling agent include water soluble or water-dispersible silane coupling agents each having a group selected from the group consisting of an epoxy group, an amino group, a (meth)acrylic group, a vinyl group, and a mercapto group. These may be may be used alone or in any combination of at least two of them.

Preferred examples of the water-soluble or water-dispersible silane coupling agent include water soluble or water-dispersible silane coupling agents represented by the following general formulae: 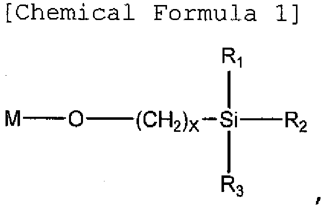 and 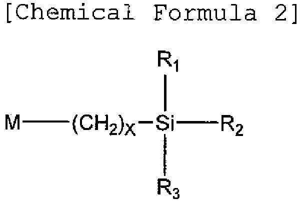 (where, X is an integer of 0 to 6, R₁, R₂, and R₃ are each an alkyl group or alkoxy group of C₁ to C₆, M is selected from the following:
(1) in a case where M is an epoxy group: 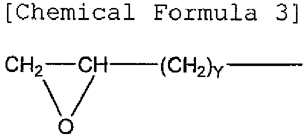 or 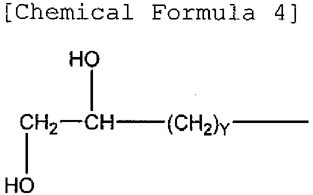 (where, Y is an integer of 1 to 6);
(2) in a case where M is a vinyl group:
   CH₂=CH-;
(3) in a case where M is an amino group:
   H₂N-,
   H₂N-C₂H₄-NH-, or
   a 3-phenylamino group;
(4) in a case where M is a methacryloxy group: 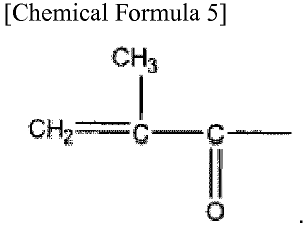
(5) in a case where M is an acryloxy group: 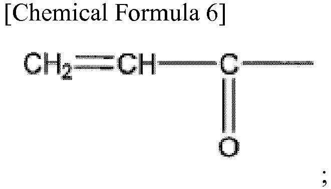 and
(6) in a case where M is a mercapto group: HS-).

In addition, the concentration of the water-soluble or water-dispersible silane coupling agent in the surface-treating aqueous solution is preferably 0.05 to 3% by weight, and more preferably 0.15 to 1.5% by weight. By setting the concentration of the water-soluble or water-dispersible silane coupling agent in the surface-treating aqueous solution within the above-described ranges, it is possible to obtain a favourable corrosion resistance and adhesion. Compound (c) is glycidol or a water-soluble or water-dispersible mono- or poly-glycidyl ether of an aliphatic mono- or poly-alcohol which has (1) two or more glycidyl ether groups, or (2) one or more hydroxyl groups and one or more glycidyl ether groups. Preferred examples of the water-soluble or water-dispersible glycidyl ether compound include glycidol, glycerol polyglycidyl ether, ethylene glycol diglycidyl ether, polyethylene glycol diglycidyl ether, polypropylene glycol diglycidyl ether and sorbitol polyglycidyl ether. The water-soluble and water-dispersible glycidyl ether compounds may be used alone or in any combination of at least two of them.

The concentration of the water-soluble or water-dispersible glycidyl ether compound in the surface-treating aqueous solution is preferably 0.05 to 3% by weight, and more preferably 0.15 to 1.5% by weight. By setting the concentration of the water-soluble or water-dispersible glycidyl ether compound in the surface-treating aqueous solution within the above-described ranges, it is possible to obtain favorable corrosion resistance and adhesion. In the present invention, it is speculated that the water-soluble or water-dispersible glycidyl ether compound causes the alkali metal silicate to be dispersed uniformly, and functions as a binder for the alkali metal silicate, thereby contributing to the corrosion resistance and the adhesion.

The surface-treating aqueous solution of the present invention may further contain a water-soluble or water-suspendable (emulsion-type) organic resin (d). The water-soluble or water-suspendable organic resin is added for the purpose of improving the corrosion resistance and improving the appearance, especially the luster. The water-soluble or water-suspendable organic resin is preferably selected from the group consisting of acrylic resins, urethane resins, and epoxy resins. Examples of the water-soluble or water-suspendable organic resin include an acrylic-based resin LDM 6316 (a styrene•acrylic ester copolymer) available from Nichigo-Mowinyl Co., LTD. , a urethane resin ELASTRON R available from Dai-ichi Kogyo Seiyaku Co., Ltd., an epoxy resin ST-58-2 (a modified epoxy resin) available from Showa Varnish Co., Ltd., and the like.

The concentration of the water-soluble or water-suspendable organic resin in the surface-treating aqueous solution is preferably 0.25 to 5% by weight, and more preferably 0.3 to 3% by weight. By setting the concentration of the water-soluble or water-suspendable organic resin within the above-described ranges, it is possible to improve the corrosion resistance, and the appearance, especially the luster. It is also possible to obtain a uniform appearance by preventing a stain due to sagging and a stain due to accumulation, and to prevent a failure in the thickness uniformity.

The pH of the surface-treating aqueous solution of the present invention is preferably in a range from 4 to 12, and more preferably in a range from 6 to 11. Meanwhile, the total solid content concentration of the surface-treating aqueous solution of the present invention is preferably in a range from 0.35 to 15%, and more preferably in a range from 0.6 to 9%. The surface-treating aqueous solution of the present invention makes it possible to form a highly corrosion resistant coating film, although the solid content concentration is lower than those of conventional treating solutions.

A surface-treating method for forming a highly corrosion resistant coating film on a zinc or zinc alloy plating of the present invention include the step of bringing a surface of a zinc or zinc alloy plating, or a surface of a chemical conversion coating film into contact with the surface-treating aqueous solution, the chemical conversion coating film being formed on a zinc or zinc alloy plating. As the method of bring the surface of the zinc or zinc alloy plating or the surface of the chemical conversion coating film into contact with the surface-treating aqueous solution, the chemical conversion coating film being formed on the zinc or zinc alloy plating, the following method is generally employed. Specifically, in this method, an item having a zinc or zinc alloy plating or an item having a chemical conversion coating film formed on a zinc or zinc alloy plating is immersed in the surface-treating aqueous solution. For example, it is preferable to perform the immersion at a liquid temperature of 10 to 80°C, preferably 20 to 50°C, for 10 to 600 seconds, and it is more preferable to perform the immersion for 30 to 120 seconds. Alternatively, the surface-treating aqueous solution may be sprayed onto the surface of the zinc or zinc alloy plating, or the surface of the chemical conversion coating film formed on the zinc or zinc alloy plating.

The item after the immersion into the surface-treating aqueous solution of the present invention or the spraying of the surface-treating aqueous solution of the present invention needs to be subjected to water draining, and then dried, for hardening the coating film. The temperature for the hardening of the coating film is preferably room temperature to 150°C. The duration for the hardening of the coating film is preferably 30 to 60 minutes when the coating film is hardened at room temperature, and preferably 5 to 10 minutes when the coating film is hardened at 150°C.

Note that the surface-treating aqueous solution of the present invention can be stored for a long period of several months.

Next, the present invention will be described on the basis of Examples; however, the present invention is not limited thereto.

### Examples

### (Examples 1 to 12 and Comparative Examples 1 to 6)

By using, as test pieces, standard test plates (cold rolled steel plates, JIS G 3141) available from Nippon Testpanel Co., Ltd each having a size of 70 mm × 100 mm × 0.8 mm, zinc or zinc alloy plating and chemical conversion coating treatments shown in Tables 1 and 2 were performed. Treatment processes before the varieties of plating were as follows:
Degreasing by immersion (PN-36 available from Dipsol Chemicals Co., Ltd.) → Water cleaning → Acid cleaning (immersion into an aqueous solution containing 300 ml of 35 %HCl per litter) → Water cleaning → Electrolytic cleaning (NC-20 available from Dipsol Chemicals Co., Ltd.) → Water cleaning → Acid activity (immersion into an aqueous solution containing 100 ml of 35% HCl per litter) → Water cleaning → Plating
Zn: Zinc plating in a zincate bath (a bath using NZ-98 available from Dipsol Chemicals Co., Ltd.)
Zn-Ni: Zn-Ni alloy plating (a bath using IZ-250Y available from Dipsol Chemicals Co., Ltd.)
Zn-Fe: Zn-Fe alloy plating (a bath using FZ-270 available from Dipsol Chemicals Co., Ltd.)
Zn + chemical conversion treatment: the zinc plating in the zincate bath, and then a trivalent chromium chemical conversion treatment (a bath using ZT-444 available from Dipsol Chemicals Co., Ltd.)
Zn-Ni + chemical conversion treatment: the Zn-Ni alloy plating, and then a trivalent chromium chemical conversion treatment (a bath using IZ-264 available from Dipsol Chemicals Co., Ltd.)

Next, the test pieces were immersed (30°C, 60 seconds) in surface-treating aqueous solutions each containing (a) an alkali metal silicate (M₂O•nSiO₂ (where, M represents an alkali metal, and n represents a SiO₂/M₂O molar ratio)); (b) a water-soluble or water-dispersible silane coupling agent; (c) a water-soluble or water-dispersible glycidyl ether compound; and (d) a water-soluble or water-suspendable organic resin, which are shown in Table 1 or 2. Subsequently, the test pieces were dried at 80°C for 20 minutes.

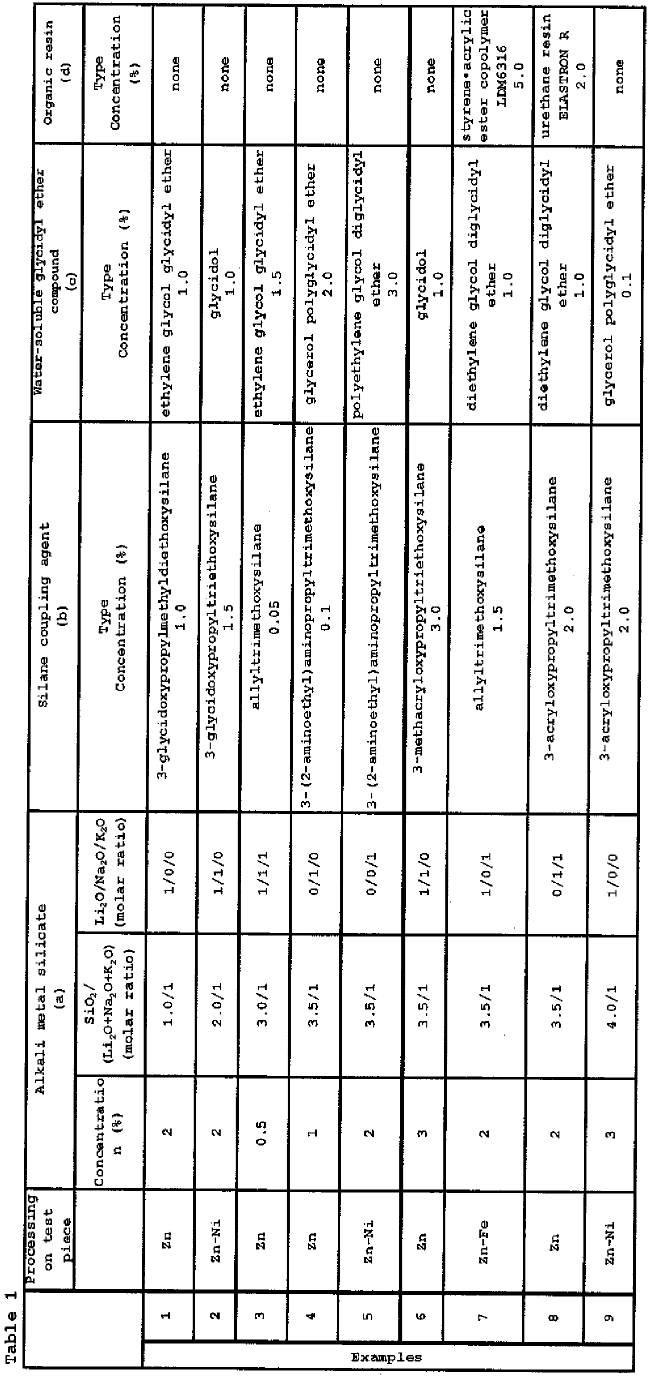

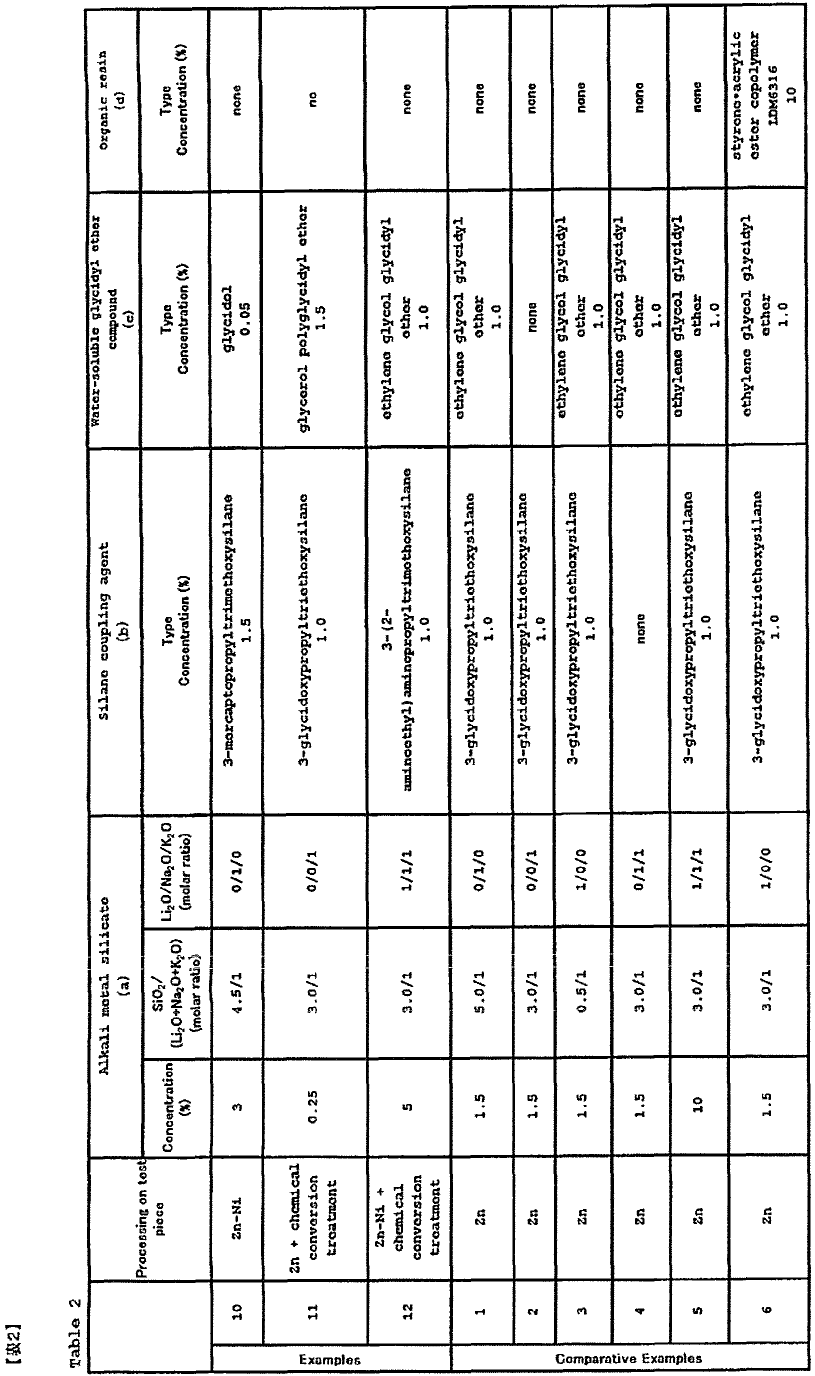

### (Comparative Example 7)

A test piece was prepared by a similar process to that in Example 11, except that no treatment with a surface-treating aqueous solution was performed.

### (Finished appearance (Uniformity))

The finished appearance (uniformity) was visually evaluated. If the uniformity was favorable, the evaluation was ○. If the finished appearance was not uniform, the evaluation was ×.

### (Finished appearance (luster))

The finished appearance (luster) was visually evaluated. If the luster was very favorable, the evaluation was ⊚. If the luster was favorable, the evaluation was ○. If the luster was not favorable, the evaluation was ×.

### (Salt spray test)

The corrosion resistance was evaluated by the salt spray test (JIS-Z-2371). If no white rust was formed within 240 hours, the evaluation was ⊚. If no white rust was formed within 120 hours, the evaluation was ○. If no white rust was formed within 120, the evaluation was Δ. If white rust was formed within 24 hours, the evaluation was ×.

### (Adhesion)

Cross-cut was performed at intervals of 1 mm to form a grating-like shape. Thereafter, a tape-peeling test was conducted (by using a cellophane adhesive tape (one having a width of 18 mm as specified in JIS Z1522)). Then the presence or absence of the peeling of the coating film was visually observed. If the result was favorable, the evaluation was ○. If the result was not preferable, the evaluation was ×.

### (Presence or absence of stain due to sagging and stain due to accumulation)

The presence or absence of a stain due to sagging and a stain due to accumulation was visually observed. If a stain due to sagging and a stain due to accumulation were absent, the evaluation was ○. If a stain due to sagging or a stain due to accumulation was present, the evaluation was X.

### (Stability of treatment liquid)

The treatment liquids ware placed in glass bottles, respectively, and allowed to stand for 4 cycles. Here, one cycle included 3 days at -5°C and 4 days at 45°C. Thereafter, the presence or absence of separation, gelation, turbidity, precipitate, and the like was visually observed. If the result was favorable, the evaluation was O. If the result was not favorable, the evaluation was ×.

### [Table 3]

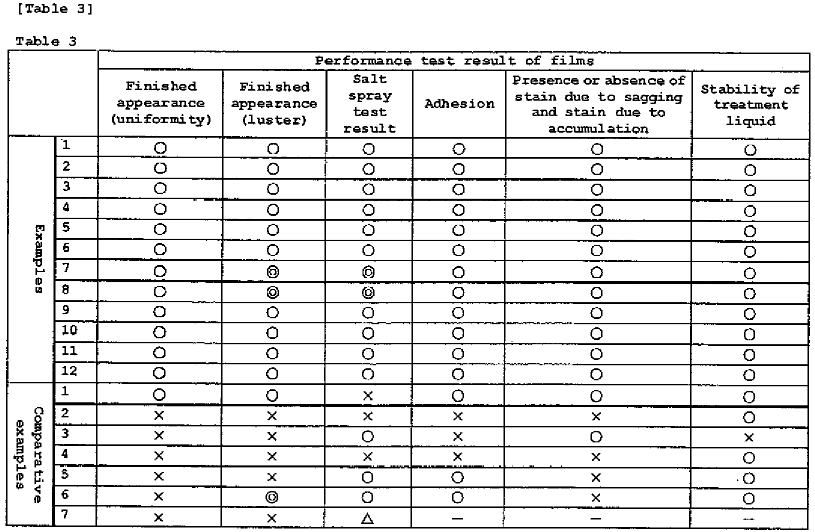

## Claims

1. A surface-treating aqueous solution for forming a corrosion resistant coating film on a zinc or zinc alloy plating, the surface-treating aqueous solution **characterized by** comprising:
(a) an alkali metal silicate M₂O·nSiO₂ where M represents an alkali metal and n represents a SiO₂/M₂O molar ratio, wherein the SiO₂/M₂O molar ratio (n) of the alkali metal silicate is from 1/1 to 4.5/1 and the concentration of the alkali metal silicate in the treating aqueous solution is from 0.25 to 5% by weight in terms of the solid content concentration;
(b) a water-soluble or water-dispersible silane coupling agent; and
(c) glycidol or a water-soluble or water-dispersible mono- or poly-glycidyl ether of an aliphatic mono- or poly-alcohol which has (i) two or more glycidyl ether groups, or (ii) one or more hydroxyl groups and one or more glycidyl ether groups.

2. The surface-treating aqueous solution according to claim 1, wherein the alkali metal in the alkali metal silicate is selected from the group consisting of Li, Na, and K.

3. The surface-treating aqueous solution according to anyone of claims 1 or 2, wherein the water-soluble or water-dispersible silane coupling agent is a water-soluble or water-dispersible silane coupling agent having a group selected from the group consisting of an epoxy group, an amino group, a (meth)acrylic group, a vinyl group, and a mercapto group.

4. The surface-treating aqueous solution according to any one of claims 1 to 3, wherein the concentration of (a) the alkali metal silicate in the treating aqueous solution is 0.25 to 5% by weight,
the concentration of (b) the water-soluble or water-dispersible silane coupling agent in the treating aqueous solution is 0.05 to 3% by weight, and
the concentration of (c) the water-soluble or water-dispersible glycidyl ether compound in the treating aqueous solution is 0.05 to 3% by weight.

5. The surface-treating aqueous solution according to any one of claims 1 to 4, further comprising 0.25 to 5% by weight of (d) a water-soluble or water-suspendable organic resin.

6. The surface-treating aqueous solution according to claim 5, wherein the organic resin is selected from the group consisting of acrylic resins, urethane resins, and epoxy resins.

7. A surface treatment method for forming a highly corrosion resistant coating film on a zinc or zinc alloy plating, the method comprising the step of bringing a surface of the zinc or zinc alloy plating into contact with the surface-treating aqueous solution according to any one of claims 1 to 6.

8. A surface treatment method for forming a highly corrosion resistant coating film on a zinc or zinc alloy plating, the method comprising the step of bringing a surface of a chemical conversion coating film into contact with the surface-treating aqueous solution according to any one of claims 1 to 6, the chemical conversion coating film being formed on the zinc or zinc alloy plating.

9. A highly corrosion resistant coating film formed by bringing the surface-treating aqueous solution according to any one of claims 1 to 6 into contact with a surface of the zinc or zinc alloy plating or with a surface of a chemical conversion coating film formed on the zinc or zinc alloy plating.

## Patentansprüche

1. Wässrige Oberflächenbehandlungslösung zum Bilden eines korrosionsbeständigen Beschichtungsfilms auf einer Zink- oder Zinklegierungsplattierung, wobei die wässrige Oberflächenbehandlungslösung **dadurch gekennzeichnet ist, dass** sie umfasst:
(a) ein Alkalimetallsilicat M₂O-nSiO₂, worin M für ein Alkalimetall steht und n für ein SiO₂/M₂O-Molverhältnis steht, wobei das SiO₂/M₂O-Molverhältnis (n) des Alkalimetallsilicats 1/1 bis 4,5/1 ist und die Konzentration des Alkalimetallsilicats in der wässrigen Behandlungslösung 0,25 bis 5 Gew.-% beträgt, bezogen auf die Feststoffkonzentration;
(b) ein wasserlösliches oder wasserdispergierbares Silan-Kopplungsmittel; und
(c) Glycidol oder einen wasserlöslichen oder wasserdispergierbaren Mono- oder Polyglycidylether eines aliphatischen Mono- oder Polyalkohols, der (i) zwei oder mehr Glycidylethergruppen oder (ii) eine oder mehrere Hydroxylgruppen und eine oder mehrere Glycidylethergruppen aufweist.

2. Wässrige Oberflächenbehandlungslösung nach Anspruch 1, wobei das Alkalimetall in dem Alkalimetallsilicat ausgewählt ist aus der Gruppe bestehend aus Li, Na, und K.

3. Wässrige Oberflächenbehandlungslösung nach einem der Ansprüche 1 oder 2, wobei das wasserlösliche oder wasserdispergierbare Silankopplungsmittel ein wasserlösliches oder wasserdispergierbares Silankopplungsmittel ist, das eine Gruppe aufweist, die aus der Gruppe bestehend aus einer Epoxygruppe, einer Aminogruppe, einer (Meth)acrylgruppe, einer Vinylgruppe und einer Mercaptogruppe ausgewählt ist.

4. Wässrige Oberflächenbehandlungslösung nach einem der Ansprüche 1 bis 3, wobei die Konzentration (a) des Alkalimetallsilicats in der wässrigen Behandlungslösung 0,25 bis 5 Gew.-% beträgt,
die Konzentration (b) des wasserlöslichen oder wasserdispergierbaren Silan-Kopplungsmittels in der wässrigen Behandlungslösung 0,05 bis 3 Gew.-% beträgt, und
die Konzentration (c) der wasserlöslichen oder wasserdispergierbaren Glycidyletherverbindung in der wässrigen Behandlungslösung 0,05 bis 3 Gew.-% beträgt.

5. Wässrige Oberflächenbehandlungslösung nach einem der Ansprüche 1 bis 4, ferner umfassend 0,25 bis 5 Gew.-% eines (d) wasserlöslichen oder in Wasser suspendierbaren organischen Harzes.

6. Wässrige Oberflächenbehandlungslösung nach Anspruch 5, wobei das organische Harz ausgewählt ist aus der Gruppe bestehend aus Acrylharzen, Urethanharzen und Epoxyharzen.

7. Oberflächenbehandlungsverfahren zum Bilden eines hochkorrosionsbeständigen Beschichtungsfilms auf einer Zink- oder Zinklegierungsplattierung, wobei das Verfahren den Schritt zum Inkontaktbringen einer Oberfläche der Zink- oder Zinklegierungsplattierung mit der wässrigen Oberflächenbehandlungslösung nach einem der Ansprüche 1 bis 6 umfasst.

8. Oberflächenbehandlungsverfahren zum Bilden eines hochkorrosionsbeständigen Beschichtungsfilms auf einer Zink- oder Zinklegierungsplattierung, wobei das Verfahren den Schritt zum Inkontaktbringen einer Oberfläche eines chemischen Umwandlungsbeschichtungsfilms mit der wässrigen Oberflächenbehandlungslösung nach einem der Ansprüche 1 bis 6, wobei der chemische Umwandlungsbeschichtungsfilm auf der Zink- oder Zinklegierungsplattierung ausgebildet wird.

9. Hochkorrosionsbeständiger Beschichtungsfilm, gebildet durch Inkontaktbringen der wässrigen Oberflächenbehandlungslösung nach einem der Ansprüche 1 bis 6 mit einer Oberfläche der Zink- oder Zinklegierungsplattierung oder mit einer Oberfläche eines chemischen Umwandlungsbeschichtungsfilms, der auf der Zink- oder Zinklegierungsplattierung ausgebildet ist.

## Revendications

1. Solution aqueuse de traitement de surface pour la formation d'un film de revêtement résistant à la corrosion sur un placage de zinc ou d'alliage de zinc, la solution aqueuse de traitement de surface étant **caractérisée en ce qu'**elle comprend :
(a) un silicate de métal alcalin M₂O·nSiO₂ où M représente un métal alcalin et n représente un rapport molaire SiO₂/M₂O, le rapport molaire SiO₂/M₂O (n) du silicate de métal alcalin étant de 1/1 à 4,5/1 et la concentration du silicate de métal alcalin dans la solution aqueuse de traitement étant de 0,25 à 5 % en poids en termes de concentration de teneur en matière solide ;
(b) un agent de couplage silane hydrosoluble ou dispersible dans l'eau ; et
(c) du glycidol ou un éther monoglycidylique ou polyglycidylique hydrosoluble ou dispersible dans l'eau d'un monoalcool ou polyol aliphatique qui a (i) deux ou plus de deux groupes éther glycidylique ou (ii) un ou plusieurs groupes hydroxyle et un ou plusieurs groupes éther glycidylique.

2. Solution aqueuse de traitement de surface selon la revendication 1, le métal alcalin dans le silicate de métal alcalin étant choisi dans le groupe constitué par Li, Na et K.

3. Solution aqueuse de traitement de surface selon l'une quelconque des revendications 1 ou 2, l'agent de couplage silane hydrosoluble ou dispersible dans l'eau étant un agent de couplage silane hydrosoluble ou dispersible dans l'eau ayant un groupe choisi dans le groupe constitué par un groupe époxy, un groupe amino, un groupe (méth)acrylique, un groupe vinyle et un groupe mercapto.

4. Solution aqueuse de traitement de surface selon l'une quelconque des revendications 1 à 3, la concentration de (a) le silicate de métal alcalin dans la solution aqueuse de traitement étant de 0,25 à 5 % en poids,
la concentration de (b) l'agent de couplage silane hydrosoluble ou dispersible dans l'eau dans la solution aqueuse de traitement étant de 0,05 à 3 % en poids et la concentration de (c) le composé éther glycidylique hydrosoluble ou dispersible dans l'eau dans la solution aqueuse de traitement étant de 0,05 à 3 % en poids.

5. Solution aqueuse de traitement de surface selon l'une quelconque des revendications 1 à 4, comprenant en outre 0,25 à 5 % en poids de (d) une résine organique hydrosoluble ou pouvant être mise en suspension dans de l'eau.

6. Solution aqueuse de traitement de surface selon la revendication 5, la résine organique étant choisie dans le groupe constitué par les résines acryliques, les résines d'uréthane et les résines époxy.

7. Procédé de traitement de surface pour la formation d'un film de revêtement hautement résistant à la corrosion sur un placage de zinc ou d'alliage de zinc, le procédé comprenant l'étape consistant à mettre en contact une surface du placage de zinc ou d'alliage de zinc avec la solution aqueuse de traitement de surface selon l'une quelconque des revendications 1 à 6.

8. Procédé de traitement de surface pour la formation d'un film de revêtement hautement résistant à la corrosion sur un placage de zinc ou d'alliage de zinc, le procédé comprenant l'étape consistant à mettre en contact une surface d'un film de revêtement de conversion chimique avec la solution aqueuse de traitement de surface selon l'une quelconque des revendications 1 à 6, le film de revêtement de conversion chimique étant formé sur le placage de zinc ou d'alliage de zinc.

9. Film de revêtement hautement résistant à la corrosion formé par la mise en contact de la solution aqueuse de traitement de surface selon l'une quelconque des revendications 1 à 6 avec une surface du placage de zinc ou d'alliage de zinc ou avec une surface d'un film de revêtement de conversion chimique formé sur le placage de zinc ou d'alliage de zinc.
